# EUROPEAN PATENT SPECIFICATION

(11) **EP 3 608 345 B1**
(45) Date of publication and mention of the grant of the patent: **20.09.2023**
(21) Application number: 19187312.4
(22) Date of filing: 19.07.2019
(51) Int. Cl.: C08F 265/06, C09D 4/06

(54) **ACRYLIC SOL COMPOSITION**
ACRYLSOLZUSAMMENSETZUNG
COMPOSITION DE SOL ACRYLIQUE

(30) Priority: 08.08.2018 JP 2018149354
(43) Date of publication of application: 12.02.2020
(73) Proprietor: PARKER ASAHI Co., Ltd., Tokyo 103-0013 (JP); TOYOTA JIDOSHA KABUSHIKI KAISHA, Toyota-shi Aichi-ken, 471-8571 (JP)
(72) Inventor: SASAGASE, Takeshi, Fukaya-shi, Saitama-ken, 369-1242 (JP); SATO, Masahiro, Fukaya-shi, Saitama-ken, 369-1242 (JP); WATANABE, Ayumi, Toyota-shi, Aichi-ken, 471-8571 (JP)
(74) Representative: Winter, Brandl - Partnerschaft mbB

(56) References cited:
- EP-A1- 1 158 035
- JP-A- 2010 059 358
- JP-A- 2011 063 637
- US-B1- 6 809 147

## Description

### CROSS-REFERENCE TO RELATED APPLICATIONS

This application claims the benefit of priority of Japanese Patent Application No. 2018-149354, filed on August 8, 2018.

### Technical Field

The present invention according to appended claims 1 to 3 relates to an acrylic sol composition to be used as a sealing material. More particularly, it relates to an acrylic sol composition to be used as a sealing material that is cured by ultraviolet irradiation, followed by thermally curing.

### Background Art

When a sealing material is used in a steel plate joining part of an automobile, a sealing material that can be used independent of the conditions of paint process baking, and can suppress air expansion or the like is required. Therefore, conventionally, an ultraviolet curing-type sealing material capable of immobilizing a material by curing an ultraviolet curing resin by ultraviolet irradiation has been proposed (see, for example, JP-A-2010-84105 (Patent Document 1)). In the technique of Patent Document 1, silica is used as a filler so that the light transmittance of the ultraviolet curing-type sealing material is improved so as to be able to irradiate ultraviolet light to a deep part even with a thickness of 1 to 3 mm.
Patent documents JP 2011 063637 A, JP 2010 059358 A and US 6 809 147 B1 disclose acrylic sol compositions to be used as sealing compositions based on acrylic sols, acrylate urethanes, blocked urethanes or isocyanates, fillers and optionally a latent curing agent, wherein these documents focus on oxime blocked compounds. An acrylic sol for a sound isolating composition is disclosed in EP 1 158 035 A1 including acrylic polymer fine particles, a plasticizer, a filler, a plasticizer, a blocking type urethane resin, a curing agent and a foaming agent.

### Summary of the Invention

### Technical Problem

The above-mentioned ultraviolet curing-type sealing material is subjected to a baking step after curing the ultraviolet curing resin by ultraviolet irradiation. The conventional ultraviolet curing-type sealing material could suppress air expansion only when it does not take long from ultraviolet curing to heating. However, when a long time has passed from ultraviolet curing in a high-temperature and high-humidity atmosphere, moisture gets into the sealing material, and the physical properties of the sealing material during ultraviolet curing would be deteriorated due to aggregation of silica used as the filler. As a result, the sealing material could not withstand air expansion during heating, resulting in poor appearance.

Further, the ultraviolet curing resin is cross-linked by photo-radical polymerization, however, it had a problem that when it is left as it is for a long time, oxygen inhibition occurs due to oxygen in air to decrease the crosslinking density, and it becomes susceptible to moisture.

The present invention has been made in view of such circumstances, and an object thereof is to provide an acrylic sol composition capable of reducing deterioration of physical properties of a sealing material due to moisture absorption after being left in a high-temperature and high-humidity atmosphere for a long time, and also suppressing oxygen inhibition.

### Solution to Problems

As a result of intensive studies for solving the above problem, the present inventors found that in an acrylic sol composition containing an acrylic resin, an ultraviolet curing resin, a blocked isocyanate resin, and silica as a filler, by incorporating a specific amount of an amine-based blocked isocyanate resin as the blocked isocyanate resin, an acrylic sol composition capable of reducing deterioration of physical properties of a sealing material due to moisture absorption after being left in a high-temperature and high-humidity atmosphere for a long time, and also suppressing oxygen inhibition can be obtained.

The acrylic sol composition of the present invention has been achieved based on such a finding, and is (1) an acrylic sol composition containing an acrylic resin, an ultraviolet curing resin, an amine-based blocked isocyanate-containing prepolymer that is formed by blocking a residual isocyanate of a polyurethane using an amine-based blocking agent, and a filler, wherein, with respect to 100 parts by weight of the acrylic resin, 80 to 150 parts by weight of the ultraviolet curing resin, 50 to 110 parts by weight of the amine-based blocked isocyanate-containing prepolymer, and 100 to 180 parts by weight of silica as the filler are contained.

(2) The acrylic sol composition according to the above (1), wherein, in addition to the silica, 80 to 160 parts by weight of surface-treated calcium carbonate as the filler with respect to 100 parts by weight of the acrylic resin is contained.

(3) The acrylic sol composition according to the above (1) or (2), wherein, with respect to 100 parts by weight of the acrylic resin, 1 to 10 parts by weight of a polymerization initiator, and 10 to 80 parts by weight of a latent curing agent activated by heating are contained.

### Advantageous Effects of Invention

The acrylic sol composition of the present invention can reduce deterioration of physical properties due to moisture absorption after being left in a high-temperature and high-humidity atmosphere for a long time, and also can suppress oxygen inhibition.

### Brief Description of Drawings

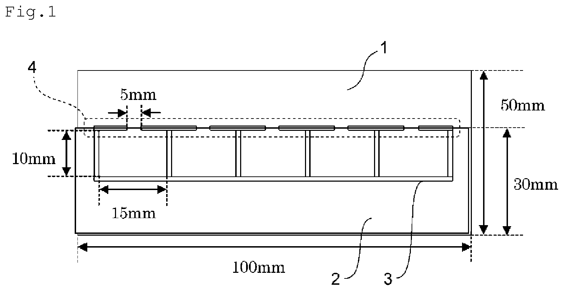

FIG. 1 is an explanatory view of a test piece used in a test for air expansion after being left to absorb moisture.

### Description of Embodiments

An embodiment of the acrylic sol composition according to the present invention will be described.

The acrylic sol composition in this embodiment can be used, for example, as a sealing material in a steel plate joining part of an automobile, an undercoat material to be used in a vehicle part such as a floor back or a wheel well, an anti-chipping material to be used in a rocker panel, a lower part of a door, a fender, or the like, etc.

When the acrylic sol composition in this embodiment is used as a sealing material, it is generally used (applied) to a thickness of about 0.5 to 2.5 mm. In order for ultraviolet light to also cure a deep part of the sealing material, it is necessary to increase the light transmittance. Therefore, silica is contained as the filler for maintaining the light transmittance.

The acrylic sol composition of this embodiment is an acrylic sol composition containing an acrylic resin, an ultraviolet curing resin, an amine-based blocked isocyanate-containing prepolymer that is formed by blocking a residual isocyanate of a polyurethane using an amine-based blocking agent, and a filler, and contains, with respect to 100 parts by weight of the acrylic resin, 80 to 150 parts by weight of the ultraviolet curing resin, 50 to 110 parts by weight of the amine-based blocked isocyanate-containing prepolymer, and 100 to 180 parts by weight of silica as the filler.

Incidentally, the acrylic sol composition of this embodiment may contain a polymerization initiator or a latent curing agent as needed.

As the acrylic resin, for example, a homopolymer or a copolymer or the like of a monomer selected from alkyl acrylate esters, alkyl methacrylate esters, and the like can be used. As the monomer, specifically, methyl acrylate, ethyl acrylate, n-propyl acrylate, isopropyl acrylate, n-butyl acrylate, isobutyl acrylate, sec-butyl acrylate, tert-butyl acrylate, cyclohexyl acrylate, benzyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, cyclohexyl methacrylate, benzyl methacrylate, or the like can be used. Further, as a copolymerization component, styrene, α-methylstyrene, methacrylic acid, acrylic acid, itaconic acid, crotonic acid, or the like can be used. The acrylic resin is in the form of a fine particle, and particularly, a core-shell type composed of a core part and a shell part is preferably used. It is particularly preferred to use butyl methacrylate that is rapidly gelled as the core part.

As the ultraviolet curing resin, an oligomer that is a reactive urethane oligomer, has a urethane structure obtained by reacting an isocyanate and a polyol, and also has a radical polymerizable carbon-carbon double bond of an acryloyl group or the like at a molecular end can be used.

As the isocyanate, an aliphatic isocyanate or an aromatic isocyanate can be used.

As the aliphatic isocyanate, trimethylene diisocyanate, tetramethylene diisocyanate, hexamethylene diisocyanate, pentamethylene diisocyanate, 2,4,4- or 2,2,4-trimethylhexamethylene diisocyanate, or dodecamethylene diisocyanate can be used.

As the aromatic isocyanate, 2,4-tolylene diisocyanate, 2,6-tolylene diisocyanate, m-phenylene diisocyanate, p-phenylene diisocyanate, 4,4' -diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, or an adduct form, a nurate form, a biuret form, or the like of the above-mentioned compounds can be used.

Other than these, isophorone diisocyanate, hydrogenated tolylene diisocyanate, hydrogenated diphenylmethane diisocyanate, hydrogenated xylylene diisocyanate, dimer acid diisocyanate, or the like can be used.

As the polyol, as a representative polyol, a polyether polyol or a polyester polyol can be used. As the polyether polyol, for example, a polyether polyol obtained by addition polymerization of one type or two or more types of monomers such as ethylene oxide, propylene oxide, butylene oxide, styrene oxide, epichlorohydrin, tetrahydrofuran, and cyclohexylene by a conventional method using, as an initiator, one type or two or more types of compounds having at least two active hydrogen atoms such as ethylene glycol, diethylene glycol, triethylene glycol, propylene glycol, trimethylene glycol, 1,3-butanediol, 1,4-butanediol, 1, 6-hexanediol, neopentylglycol, glycerin, trimethylolethane, trimethylolpropane, sorbitol, sucrose, aconitic sugar, trimellitic acid, hemimellitic acid, phosphoric acid, ethylenediamine, diethylenetriamine, triisopropanolamine, pyrogallol, dihydroxybenzoic acid, hydroxyphthalic acid, and 1,2,3-propanetrithiol, or a polyether polyol obtained by ring-opening polymerization of the above-mentioned monomer using a cationic catalyst, protonic acid, Lewis acid, or the like as a catalyst can be used.

As the polyester polyol, a condensed polyester polyol, a lactone-based polyester polyol, a polyester polyol containing polycarbonate diol, or the like can be used.

Other than these, among polybutadiene-based polyols, polyolefin-based polyols, and polyether polyols, a polymer polyol obtained by polymerization or graft polymerization of acrylonitrile alone or a mixed monomer of acrylonitrile and at least one type selected from the group consisting of styrene, acrylamide, an acrylate ester, a methacrylate ester, and vinyl acetate, or the like can be used.

The ultraviolet curing resin is preferably contained in an amount of 80 to 150 parts by weight with respect to 100 parts by weight of the acrylic resin. This is because when the amount is less than 80 parts by weight, ultraviolet curing is insufficient and air expansion occurs, and when the amount exceeds 150 parts by weight, the viscosity is increased and the coating workability is deteriorated.

As the polymerization initiator, for example, a benzoin-based, an alkylphenone-based (benzyl dimethyl ketal, α-hydroxyalkylphenone, α-aminoalkylphenone, or the like), an acyl phosphine oxide-based (mono-acyl phosphine oxide, bis-acyl phosphine oxide, or the like), a titanocene-based, an oxime ester-based, an oxyphenylacetate ester-based, a sulfur compound such as tetramethyl thiuram disulfide, or the like can be used.

Among the polymerization initiators, it is preferred to use an acyl phosphine oxide-based compound since it is necessary to perform ultraviolet curing to a deep part of a thick film. Further, it is preferred to mix an α-hydroxyalkylphenone-based compound which is an alkylphenone-based compound with an acyl phosphine oxide-based compound. This is because improvement of the polymerization efficiency and enhancement of surface curing can be achieved. Further, two systems for enhancing surface curing and enhancing curing to a deep part may be used in combination as the polymerization initiator.

The polymerization initiator is preferably contained in an amount of 1 to 10 parts by weight with respect to 100 parts by weight of the acrylic resin. This is because when the amount is less than 1 part by weight, ultraviolet curing is insufficient, and when the amount exceeds 10 parts by weight, a large amount of an unreacted material remains and the coating performance is deteriorated.

As the latent curing agent, for example, a polyamine-based and its modified material, an aromatic amine-based and its modified material, a hydrazide-based, or the like can be used. Any of these can be used as long as it is inactive at normal temperature, but is activated by heating and reacts with an isocyanate.

The latent curing agent is preferably contained in an amount of 10 to 80 parts by weight, and particularly preferably contained in an amount of 20 to 60 parts by weight with respect to 100 parts by weight of the acrylic resin. This is because when the amount is less than 10 part by weight, adhesiveness to an adherend is insufficient, and when the amount exceeds 80 parts by weight, a large amount of an unreacted material remains and the coating performance is deteriorated.

As the amine-based blocked isocyanate resin as an adhesion agent, an amine-based blocked isocyanate-containing urethane prepolymer is used. The amine-based blocked isocyanate-containing urethane prepolymer is a material formed by blocking a residual isocyanate of a polyurethane obtained by reacting an isocyanate and a polyol such as a polyether polyol or a polyester polyol using an amine-based blocking agent.

The blocked isocyanate-containing urethane prepolymer can be produced according to the following procedure. First, a polyol and an excess amount of a polyisocyanate compound are reacted with each other, whereby a terminal NCO-containing urethane prepolymer is obtained.

As the polyol, as a representative polyol, a polyether polyol or a polyester polyol can be used. As the polyether polyol, for example, a polyether polyol obtained by addition polymerization of one type or two or more types of monomers such as ethylene oxide, propylene oxide, butylene oxide, styrene oxide, epichlorohydrin, tetrahydrofuran, and cyclohexylene by a conventional method using, as an initiator, one type or two or more types of compounds having at least two active hydrogen atoms such as ethylene glycol, diethylene glycol, triethylene glycol, propylene glycol, trimethylene glycol, 1,3-butanediol, 1,4-butanediol, 1, 6-hexanediol, neopentylglycol, glycerin, trimethylolethane, trimethylolpropane, sorbitol, sucrose, aconitic sugar, trimellitic acid, hemimellitic acid, phosphoric acid, ethylenediamine, diethylenetriamine, triisopropanolamine, pyrogallol, dihydroxybenzoic acid, hydroxyphthalic acid, and 1,2,3-propanetrithiol, or a polyether polyol obtained by ring-opening polymerization of the above-mentioned monomer using a cationic catalyst, protonic acid, Lewis acid, or the like as a catalyst can be used.

As the polyester polyol, a condensed polyester polyol, a lactone-based polyester polyol, a polyester polyol containing polycarbonate diol, or the like can be used.

Other than these, among polybutadiene-based polyols, polyolefin-based polyols, and polyether polyols, a polymer polyol obtained by polymerization or graft polymerization of acrylonitrile alone or a mixed monomer of acrylonitrile and at least one type selected from the group consisting of styrene, acrylamide, an acrylate ester, a methacrylate ester, and vinyl acetate, or the like can be used.

As the above-mentioned polyisocyanate compound, an aliphatic isocyanate such as trimethylene diisocyanate, tetramethylene diisocyanate, hexamethylene diisocyanate, pentamethylene diisocyanate, 2,4,4- or 2,2,4-trimethylhexamethylene diisocyanate, or dodecamethylene diisocyanate, 1,3-cyclopentane diisocyanate, 1,6-hexane diisocyanate, 1,4-cyclohexane diisocyanate, 1,3-cyclohexane diisocyanate, 4,4'-methylenebis(cyclohexyl isocyanate), methyl 2,4-cyclohexane diisocyanate, methyl 2,6-cyclohexane diisocyanate, 1,4-bis(isocyanatomethyl)cyclohexane, 1,3-bis(isocyanatomethyl)cyclohexane; or an aromatic isocyanate such as m-phenylene diisocyanate, p-phenylene diisocyanate, 4,4'-diphenyl diisocyanate, 1,5-naphthalene diisocyanate, 4,4'-diphenylmethane diisocyanate, Crude MDI, 2,4- or 2,6-tolylene diisocyanate, 4,4'-toluidine diisocyanate, dianisidine diisocyanate, 4,4'-diphenyl ether diisocyanate, 1,3- or 1,4-xylylene diisocyanate, or ω,ω'-diisocyanate-1,4-diethylbenzene can be used. Other than these, isophorone diisocyanate, hydrogenated tolylene diisocyanate, hydrogenated diphenylmethane diisocyanate, hydrogenated xylylene diisocyanate, dimer acid diisocyanate, or the like can be used.

Subsequently, the terminal NCO-containing urethane prepolymer is reacted with an appropriate amine-based blocking agent so as to block free NCO, whereby the target amine-based blocked isocyanate-containing urethane prepolymer is obtained.

As the amine-based blocking agent, for example, an amine compound such as dicyclohexylamine can be used.

The amine-based blocked isocyanate resin is preferably contained in an amount of 50 to 110 parts by weight with respect to 100 parts by weight of the acrylic resin. This is because when the amount is less than 50 parts by weight, air expansion occurs after it is left to absorb moisture, and when the amount exceeds 110 parts by weight, the viscosity is increased and the coating workability is deteriorated.

When the ultraviolet curing resin is left as it is for a long time, oxygen inhibition occurs due to oxygen in air to decrease the crosslinking density, however, when an amine is bonded as a blocking agent, the amine acts as a base and exhibits an effect of suppressing oxygen inhibition in the ultraviolet curing resin. Therefore, the crosslinking density of the ultraviolet curing resin is kept and the physical properties during ultraviolet curing can be maintained. Further, the crosslinking density is high, and therefore, the resin can be made less susceptible to moisture from the outside.

As the filler, silica is essential, however, in addition to silica, for example, an inorganic filler such as calcium carbonate, barium sulfate, clay, diatomaceous earth, or talc can be used. As the filler, in addition to silica, one type of these inorganic fillers can be used alone or two or more types thereof can be used in combination. It is particularly preferred to use silica having high light transmittance and surface-treated calcium carbonate in combination.

In this embodiment, as the filler, silica and surface-treated calcium carbonate are mixed and used. This is because when being left in a high-temperature and high-humidity atmosphere for a long time, silica is aggregated due to moisture getting into a sealing material, and the physical properties of the sealing material during ultraviolet curing are deteriorated. However, by partially replacing silica with surface-treated calcium carbonate, aggregation of silica due to moisture is reduced, and the deterioration of the physical properties of the sealing material by moisture absorption after being left in a high-temperature and high-humidity atmosphere for a long time can be reduced.

Silica is preferably contained in an amount of 100 to 180 parts by weight with respect to 100 parts by weight of the acrylic resin. This is because when the amount is less than 100 parts by weight, the viscosity is decreased, and when the amount exceeds 180 parts by weight, air expansion occurs after it is left to absorb moisture.

The surface-treated calcium carbonate is preferably contained in an amount of 80 to 160 parts by weight with respect to 100 parts by weight of the acrylic resin. This is because when the amount is less than 80 parts by weight, air expansion occurs after it is left to absorb moisture, and when the amount exceeds 160 parts by weight, the ultraviolet transmittance is decreased to decrease the curability.

### Examples

Hereinafter, the acrylic sol composition according to the present invention will be more specifically described using Examples, however, the invention is not limited to the following Examples as long as the gist thereof is not exceeded.

Acrylic sol compositions of Examples 1 to 10 and Comparative Examples 1 to 11 were prepared using the following raw materials according to the formulations shown in Table 1 and Table 2.

### [Blended Raw Materials]

(1) Acrylic resin: acrylic powder for plastisol (Dianal LP-3106, manufactured by Mitsubishi Rayon Co., Ltd.)
(2) Ultraviolet curing resin
   A: aliphatic urethane oligomer (CN9002, manufactured by Sartomer Company, Inc.)
   B: aromatic urethane oligomer (CN978, manufactured by Sartomer Company, Inc.)
(3) Polymerization initiator: bis(2,4,6-trimethylbenzoyl)-phenylphosphine oxide (acylphosphine oxide-based) (IRGACURE 819, manufactured by BASF SE)
(4) Latent curing agent (powder): polyamine-based (EH3731S, manufactured by ADEKA Co., Ltd.)
(5) Curing agent (liquid): polyamine-based (QH7150, manufactured by ADEKA Co., Ltd.)
(6) Adhesion agent
   x: amine-based blocked isocyanate-containing urethane prepolymer (XMN3030, manufactured by The Dow Chemical Company)
   y: oxime-based blocked isocyanate-containing urethane prepolymer (QR9401-1, manufactured by ADEKA Co., Ltd.)
   z: polyamideamine (Versamid AP-10, manufactured by Cognis Japan Ltd.)
(7) Filler: silica (Reolosil, manufactured by Tokuyama Corporation), surface-treated calcium carbonate (Neolite SP, manufactured by Takehara Kagaku Kogyo Co., Ltd.)
(8) Plasticizer: DINP (manufactured by J-PLUS Company, Limited)

### [Test and Evaluation Methods]

With respect to the above-mentioned Examples and Comparative Examples, evaluation was performed under the following conditions, and the results are shown in Table 1 and Table 2.
(1) Curability: Each example was applied to a test piece made of a steel plate of 100 mm × 100 mm to a film thickness of 2 mm, irradiated with ultraviolet light (irradiation condition: 1000 mJ/cm²), and thereafter deformation thereof by being pushed with a finger was confirmed by visual observation.
   Evaluation Criteria: A: The acrylic sol composition is not adhered to the finger. B: The acrylic sol composition is adhered to the finger.
(2) Air expansion after being left to absorb moisture: To a first test piece 1 made of a steel plate of 100 mm × 50 mm shown in FIG. 1, an adhesive 3 containing glass beads with a particle diameter of 0.2 mm was applied in a pattern in which five rectangles connected to one another while leaving a 5 mm space in each were formed. Subsequently, an acrylic sol composition 4 was applied linearly thereto to a film thickness of 2 mm so as to close the spaces. On this first test piece 1, a second test piece 2 made of a steel plate of 100 mm × 30 mm was superimposed. Then, the resulting material was irradiated with ultraviolet light (irradiation condition: 1000 mJ/cm²), and thereafter left for 72 hours under temperature and humidity conditions of 30°C and 80% RH. Thereafter, baking was performed at 140°C for 30 minutes, and the presence or absence of air expansion was confirmed by visual observation.
   Evaluation Criteria: A: Air expansion was absent. B: Air expansion was present.
(3) Adhesion to gently heated steel plate: Each example was applied to a test piece made of an electrodeposition-coated steel plate of 70 mm × 150 mm to a film thickness of 2 mm, a width of 10 mm, and a length of 100 mm, irradiated with ultraviolet light (irradiation condition: 1000 mJ/cm²), and thereafter heated to 140°C over 24 minutes, and further baked for 20 minutes. Thereafter, the adhesion thereof to the electrodeposited steel plate was confirmed by peeling it with fingernails.
   Evaluation Criteria: Cf: cohesive fracture Af: interfacial fracture (including one in which interfacial fracture occurred even in a portion).
(4) Workability: Each example was measured at 20°C or lower using a SOD viscometer and a No. 2 capillary.
   Evaluation Criteria: accepted when the viscosity is from 15 to 25 Pa·s
(5) Stability: Each example was prepared in an amount of 500 mL, and a change in viscosity after being left at 35°C for 10 days was measured.
   Evaluation Criteria: accepted when the ratio of change in viscosity was 30% or less.
(6) Adhesion to water-resistant paint: Each example was applied to a test piece made of an electrodeposition-coated steel plate of 70 mm × 150 mm to a film thickness of 2 mm, a width of 50 mm, and a length of 100 mm, irradiated with ultraviolet light (irradiation condition: 1000 mJ/cm²), and thereafter, an intermediate coat, a top coat, and a clear coat were applied thereto, followed by baking at 140°C for 30 minutes. Thereafter, the resulting material was left in a constant temperature water bath at 40°C for 10 days, and then, a cross-cut test was performed.
   Evaluation Criteria: accepted when no peeling occurred (0/100)
(7) Elongation: Each example was applied onto a release paper to form a 2 mm coat film, irradiated with ultraviolet light (irradiation condition: 1000 mJ/cm²), and thereafter, baked at 140°C for 60 minutes. Thereafter, the resulting material was punched out with a No. 2 dumbbell, and pulled at a tensile speed of 50 mm/min, and an elongation rate at break was calculated.
   Evaluation Criteria: accepted when the elongation was 150% or more

Incidentally, in the ultraviolet irradiation in the above (1), (2), (3), (6), and (7), "UVX-T3-405" manufactured by EYE GRAPHICS Co., Ltd. was used, and a distance to the target object was set to 50 mm.

Such evaluation results of Examples 1 to 10 and Comparative Examples 1 to 11 are shown in Table 1 and Table 2.

**[Table 1]**

| Blended material/parts by weight | | Example | | | | | | | | | |
|---|---|---|---|---|---|---|---|---|---|---|---|
| | | 1 | 2 | 3 | 4 | 5 | 6 | 7 | 8 | 9 | 10 |
| (1) Acrylic resin | | 100 | 100 | 100 | 100 | 100 | 100 | 100 | 100 | 100 | 100 |
| (2) Ultraviolet curing resin | A: aliphatic urethane oligomer | 100 | 100 | 100 | 100 | 100 | 100 | 100 | 80 | 150 | - |
| | B: aromatic urethane oligomer | - | - | - | - | - | - | - | - | - | 100 |
| (3) Polymerization initiator | acylphosphine oxide-based | 3 | 3 | 3 | 3 | 3 | 3 | 3 | 3 | 3 | 3 |
| (4) Latent curing agent | polyamine-based | 40 | 40 | 40 | 40 | 40 | 40 | 40 | 40 | 40 | 40 |
| (6) Adhesion agent | x: blocked isocyanate-containing urethane prepolymer | 50 | 60 | 80 | 100 | 110 | 80 | 80 | 80 | 80 | 80 |
| (7) Filler | silica | 160 | 160 | 160 | 160 | 160 | 180 | 100 | 160 | 160 | 160 |
| | surface-treated calcium carbonate | 100 | 100 | 100 | 100 | 100 | 80 | 160 | 100 | 100 | 100 |
| (8) Plasticizer | DINP | 300 | 300 | 300 | 300 | 300 | 300 | 300 | 300 | 300 | 300 |
| (1) Curability | | A | A | A | A | A | A | A | A | A | A |
| (2) Air expansion after being leftto absorb moisture | | A | A | A | A | A | A | A | A | A | A |
| (3) Adhesion to gently heated steel plate | | Cf | Cf | Cf | Cf | Cf | Cf | Cf | Cf | Cf | Cf |
| | | | | | | | | | | | |
| (4) Workability | | 19.7 | 21.4 | 22.5 | 23.7 | 24.8 | 24.6 | 16.9 | 23.8 | 18.2 | 24.8 |
| (15 to 25 Pa.s) | | | | | | | | | | | |
| (5) Stability | | 16.5 | 17.9 | 20.6 | 23.1 | 27.7 | 20.6 | 17.2 | 16.6 | 27.4 | 22.2 |
| (ratio of change in viscosity: 30% or less) | | | | | | | | | | | |
| (6) Adhesion to water-resistant paint | | 0/100 | 0/100 | 0/100 | 0/100 | 0/100 | 0/100 | 0/100 | 0/100 | 0/100 | 0/100 |
| (No peeling: 0/100) | | | | | | | | | | | |
| (7) Elongation | | 165 | 170 | 175 | 180 | 180 | 160 | 175 | 160 | 190 | 155 |
| (150% or more) | | | | | | | | | | | |

**[Table 2]**

| Blended material/parts by weight | | Comparative Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| (1) Acrylic resin | | 100 | 100 | 100 | 100 | 100 | 100 | 100 | 100 | 100 | 100 | 100 |
| (2) Ultraviolet curing resin | A: aliphatic urethane oligomer | 100 | 100 | 100 | 100 | 100 | 100 | 100 | 100 | 100 | 70 | 160 |
| | B: aromatic urethane oligomer | - | - | - | - | - | - | - | - | - | - | - |
| (3) Polymerization initiator | acylphosphine oxide-based | 3 | 3 | 3 | 3 | 3 | 3 | 3 | 3 | 3 | 3 | 3 |
| (4) Latent curing agent | polyamine-based | 40 | 40 | 40 | 40 | 40 | 40 | 40 | 40 | 40 | 40 | 40 |
| (5) Curing agent (liquid) | polyamine-based | - | - | - | 20 | - | < | - | - | - | - | - |
| (6) Adhesion agent | x: blocked isocyanate-containing urethane prepolymer | - | 40 | 120 | - | - | 80 | 80 | 80 | 80 | 80 | 80 |
| | y: blocked isocyanate-containing urethane prepolymer | 60 | - | - | 60 | 60 | - | - | - | - | - | - |
| | z: polyamideamine | - | - | - | - | 10 | - | - | - | - | - | - |
| (7) Filler | silica | 160 | 160 | 160 | 160 | 160 | 260 | 200 | 80 | - | 160 | 160 |
| | surface-treated calcium carbonate | 100 | 100 | 100 | 100 | 100 | - | 60 | 180 | 260 | 100 | 100 |
| (8) Plasticizer | DINP | 300 | 300 | 300 | 300 | 300 | 300 | 300 | 300 | 300 | 300 | 300 |
| (1) Curability | | A | A | A | A | A | A | A | A | B | B | A |
| (2) Air expansion after being left to absorb moisture | | B | A | A | A | A | B | B | A | B | B | A |
| (3) Adhesion to gently heated steel plate | | Af | Af | Cf | Cf | Cf | Af | Af | Cf | Af | Cf | Cf |
| | | | | | | | | | | | | |
| (4) Workability | | 18.8 | 17.8 | 27.2 | 18.5 | 19.1 | 42.2 | 30.6 | 14.2 | 6.2 | 24.8 | 16.9 |
| (15 to 25 Pa.s) | | | | | | | | | | | | |
| (5) Stability | | 14.2 | 15.3 | 30.1 | 39.7 | 33.5 | 21.8 | 20.1 | 14.6 | 13.3 | 15.6 | 30.3 |
| (ratio of change in viscosity: 30% or less) | | | | | | | | | | | | |
| (6) Adhesion to water-resistant paint | | 0/100 | 0/100 | 0/100 | 0/100 | 0/100 | 0/100 | 0/100 | 0/100 | 0/100 | 0/100 | 0/100 |
| (No peeling: 0/100) | | | | | | | | | | | | |
| (7) Elongation | | 170 | 160 | 199 | 150 | 140 | 160 | 160 | 175 | 175 | 155 | 200 |
| 150% or more) | | | | | | | | | | | | |

From the test results of Examples 1 to 10 shown in Table 1 and the test results of Comparative Examples 1 to 11 shown in Table 2, it could be confirmed that in the case of the acrylic sol compositions of Examples, with respect to each of the items of (1) curability, (2) air expansion after being left to absorb moisture, (3) adhesion to gently heated steel plate, (4) workability, (5) stability, (6) adhesion to water-resistant paint, and (7) elongation, favorable test results are shown, and deterioration of physical properties due to moisture absorption after being left in a high-temperature and high-humidity atmosphere for a long time can be reduced, and also oxygen inhibition can be suppressed.

### Reference Signs List

1: first test piece
2: second test piece
3: adhesive containing glass beads
4: acrylic sol composition

## Claims

1. An acrylic sol composition, comprising
an acrylic resin,
an ultraviolet curing resin,
an amine-based blocked isocyanate-containing prepolymer that is formed by blocking a residual isocyanate of a polyurethane using an amine-based blocking agent, and
a filler,
wherein, with respect to 100 parts by weight of the acrylic resin, 80 to 150 parts by weight of the ultraviolet curing resin, 50 to 110 parts by weight of the amine-based blocked isocyanate-containing prepolymer, and 100 to 180 parts by weight of silica as the filler are contained.

2. The acrylic sol composition according to claim 1, wherein, in addition to the silica, 80 to 160 parts by weight of surface-treated calcium carbonate as the filler with respect to 100 parts by weight of the acrylic resin is contained.

3. The acrylic sol composition according to claim 1 or 2, wherein, with respect to 100 parts by weight of the acrylic resin, 1 to 10 parts by weight of a polymerization initiator, and 10 to 80 parts by weight of a latent curing agent activated by heating are contained.

## Patentansprüche

1. Acrylsolzusammensetzung, umfassend
ein Acrylharz,
ein UV-härtendes Harz,
ein blockiertes isocyanathaltiges Prepolymer auf Aminbasis, das durch Blockieren eines Restisocyanats eines Polyurethans unter Verwendung eines Blockierungsmittels auf Aminbasis gebildet wird, und
einen Füllstoff,
wobei, bezogen auf 100 Gewichtsteile des Acrylharzes, 80 bis 150 Gewichtsteile des UV-härtenden Harzes, 50 bis 110 Gewichtsteile des blockierten isocyanathaltigen Prepolymers auf Aminbasis und 100 bis 180 Gewichtsteile an Siliciumdioxid als Füllstoff enthalten sind.

2. Acrylsolzusammensetzung nach Anspruch 1, wobei zusätzlich zu dem Siliciumdioxid 80 bis 160 Gewichtsteile oberflächenbehandeltes Calciumcarbonat als Füllstoff, bezogen auf 100 Gewichtsteile des Acrylharzes, enthalten sind.

3. Acrylsolzusammensetzung nach Anspruch 1 oder 2, wobei, bezogen auf 100 Gewichtsteile des Acrylharzes, 1 bis 10 Gewichtsteile eines Polymerisationsinitiators und 10 bis 80 Gewichtsteile eines durch Erwärmen zu aktivierenden latenten Härters enthalten sind.

## Revendications

1. Composition de sol acrylique, comprenant
une résine acrylique,
une résine durcissable aux ultraviolets,
un prépolymère contenant un isocyanate séquencé à base d'amine qui est formé par séquençage d'un isocyanate résiduel d'un polyuréthane en utilisant un agent de séquençage à base d'amine, et
une charge,
dans laquelle, par rapport à 100 parties en poids de la résine acrylique, 80 à 150 parties en poids de la résine durcissable aux ultraviolets, 50 à 110 parties en poids du prépolymère contenant un isocyanate séquencé à base d'amine, et 100 à 180 parties en poids de silice en tant que charge sont présents.

2. Composition de sol acrylique selon la revendication 1, dans laquelle, en plus de la silice, 80 à 160 parties en poids d'un carbonate de calcium traité en surface en tant que charge par rapport à 100 parties en poids de la résine acrylique est présent.

3. Composition de sol acrylique selon la revendication 1 ou 2, dans laquelle, par rapport à 100 parties en poids de la résine acrylique, 1 à 10 parties en poids de l'initiateur de polymérisation, et 10 à 80 parties en poids d'un agent de durcissement latent activé par chauffage sont présents.
